# EUROPÄISCHE PATENTSCHRIFT

(11) **EP 0 356 639 B1**
(45) Veröffentlichungstag und Bekanntmachung des Hinweises auf die Patenterteilung: **15.09.1993**
(21) Anmeldenummer: 89111051.2
(22) Anmeldetag: 19.06.1989
(51) Int. Cl.: B60J 7/12

(54) **Verdeck für Fahrzeuge, insbesondere Personenwagen**
Folding top for vehicles especially for passenger cars
Capote pour véhicules, notamment pour voitures de tourisme

(30) Priorität: 30.08.1988 DE 3829345
(43) Veröffentlichungstag der Anmeldung: 07.03.1990
(73) Patentinhaber: Dr.Ing.h.c. F. Porsche Aktiengesellschaft, 70435 Stuttgart (DE)
(72) Erfinder: Hofmann, Franz, D-7252 Hausen/Würm (DE)

(56) Entgegenhaltungen:
- DE-A- 2 841 791
- US-A- 2 040 680
- US-A- 2 708 137

## Beschreibung

Die Erfindung bezieht sich auf ein Verdeck für Fahrzeuge, insbesondere Personenwagen, gemäß dem Oberbegriff des Anspruchs 1.

Bei einem bekannten Verdeck (US-A-2,040,680) liegt der äußere Verdeckbezug befestigungslos an der Außenseite der querverlaufenden Spriegel an und wird durch diese gespannt. Dieser Anordnung haftet der Nachteil an, daß sich der Verdeckbezug des geschlossenen Verdecks im Fahrbetrieb, insbesondere bei höheren Geschwindigkeiten, ballonförmig aufbläht, was als störend empfunden wird. Darüber hinaus werden bei einem derartigen ungefütterten Verdeck die außerhalb des Fahrzeuges auftretenden Geräusche nahezu in voller Lautstärke über den Verdeckbezug in den Fahrgastraum des Fahrzeuges übertragen. Ferner bietet ein derartiges Verdeck nur einen geringen Schutz gegenüber Wärme bzw. Kälte.

Die US-P-A-708,137 zeigt ein Verdeck für Fahrzeuge, insbesondere Personenkraftwagen, das einen äußeren Verdeckbezug und ein aufbauseitig angelenktes Verdeckgestänge mit mehreren, quer zur Fahrzeuglängsrichtung verlaufenden Spriegeln umfasst, wobei auf der einem Fahrgastraum zugekehrten Seite des äußeren Verdeckbezuges ein innerer Dachhimmel angeordnet ist. Der Dachhimmel ist aus wärmeisolierendem Material gefertigt.

Aufgabe der Erfindung ist es, an einem Verdeck solche Vorkehrungen zu treffen, daß bei reduzierter Geräuschbelastung im Fahrgastraum der Aufblaseffekt bei geschlossenem Verdeck vermieden wird. Außerdem soll ein wirkungsvoller Wärme- bzw. Kälteschutz erzielt werden.

Erfindungsgemäß wird diese Aufgabe durch die kennzeichnenden Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß durch die Anordnung eines Dachhimmels und einer wärme- und schallisolierenden Zwischenschicht die Geräuschbelastung im Fahrgastraum wesentlich reduziert wird, wobei durch das Befestigen des Verdeckbezuges, des Dachhimmels und der Trägerbahnen der Zwischenschicht an sämtlichen querverlaufenden Spriegeln ein Aufblasen des Verdeckbezuges weitgehend vermieden wird. Durch örtlich angeordnete, geformte Luftkissen an der Innenseite des Verdeckbezuges oder unter der Zwischenschicht wird erreicht, daß das Verdeck einen runden Formverlauf ohne Einfallstellen aufweist.

Ein Ausführungsbeispiel der Erfindung ist in der Zeichnung dargestellt und wird im folgenden näher erläutert. Es zeigt
- Fig. 1: eine Teilseitenansicht eines Personenwagens mit einem Verdeck,
- Fig. 2: eine Teilseitenansicht des Verdecks ohne den äußeren Verdeckbezug,
- Fig. 3: einen Schnitt nach der Linie III-III der Fig. 2 in größerem Maßstab,
- Fig. 4: inen Schnitt nach der Linie IV-IV der Fig. 2 in größerem Maßstab,
- Fig. 5: eine Draufsicht auf das Verdeck gemäß Fig. 2,
- Fig. 6: einen Schnitt nach der Linie VI-VI der Fig. 5 in größerem Maßstab, und
- Fig. 7: einen Schnitt nach der Linie VII-VII der Fig. 5 in größerem Maßstab.

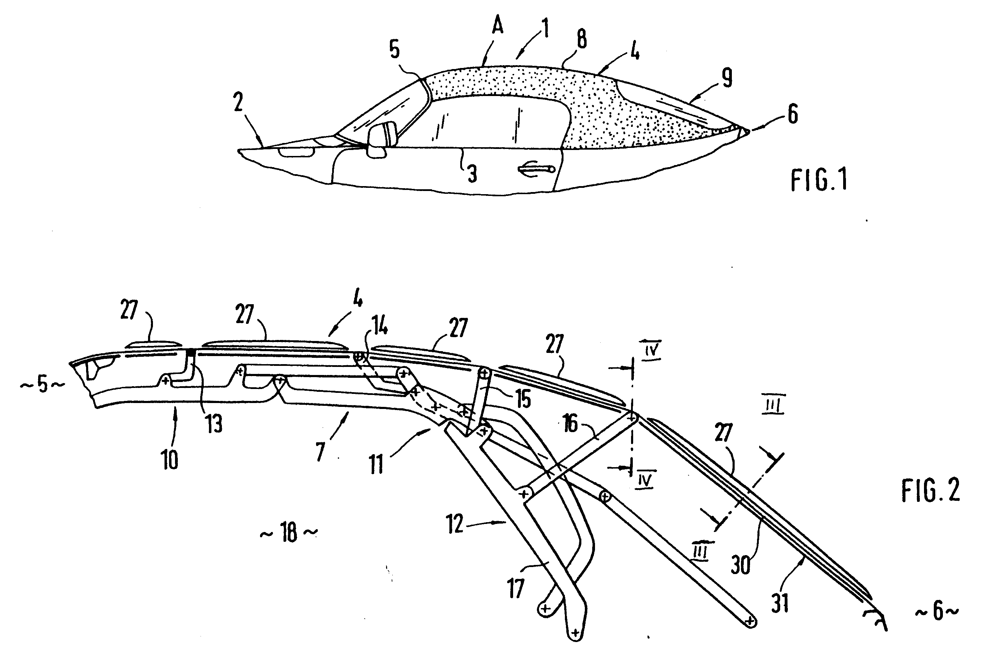

Fig. 1 zeigt einen Personenwagen 1, dessen Aufbau 2 oberhalb einer Gürtellinie 3 ein Verdeck 4 umfaßt, das sich in der Schließstellung A zwischen einem Windschutzscheibenrahmen 5 und einem Heckbereich 6 erstreckt. In der Schließstellung A ist das Verdeck 4 über nicht näher dargestellte Verschlüsse am Windschutzscheibenrahmen 5 in Lage gehalten. Nach Lösen der Verschlüsse läßt sich das Verdeck 4 in einen nicht gezeigten, heckseitigen Stauraum zurückklappen.

Das vorzugsweise als Klappverdeck ausgebildete Verdeck 4 setzt sich aus einem Verdeckgestell 7 und einem äußeren Verdeckbezug 8 zusammen, der benachbart des Heckbereichs 6 mit einer flexiblen oder starren Sichtscheibe 9 versehen ist. Das Verdeckgestell 7 umfaßt gemäß Fig. 2 einen vorderen Verdeckrahmen 10, einen hinteren Verdeckrahmen 11, ein am hinteren Verdeckrahmen 11 angreifendes Parallelogrammgestänge 12 sowie quer zur Fahrzeuglängsrichtung verlaufende Spriegel 13, 14, 15, 16. Der Spriegel 13 ist am vorderen Verdeckrahmen 10 drehbar angelenkt, wogegen der Spriegel 14 dem hinteren Verdeckrahmen 11 zugeordnet ist. Der feststehende Spriegel 15 bildet einen oberen Teil einer Hauptverdecksäule 17 und der schwenkbare Spriegel 16 ist an der Hauptverdecksäule 17 drehbar angelenkt und verläuft oberhalb der Sichtscheibe 9.

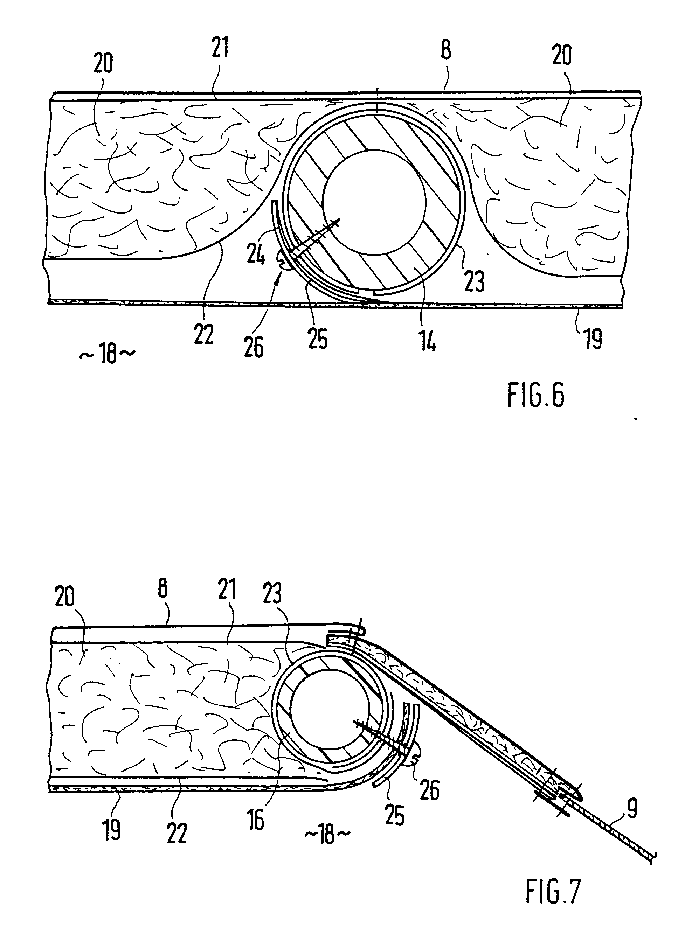

Gemäß Fig. 6 ist das Verdeck 4 auf der einem Fahrgastraum 18 zugekehrten Seite mit einem Dachhimmel 19 und einer schall- und wärmeisolierenden Zwischenschicht 20 versehen, die zwischen Dachhimmel 19 und Verdeckbezug 8 angeordnet ist. Die durch ein Faservlies aus Polyesterfaser, Gummihaargewebe oder dergleichen gebildete Zwischenschicht 20 erstreckt sich zwischen einer oberen und einer unteren Trägerbahn 21 bzw. 22 und ist mit beiden Trägerbahnen 21, 22 verklebt. Die Zwischenschicht 20 bewirkt, daß im Fahrgastraum 18 ein Temperaturausgleich erfolgt, d.h., daß es im Sommer nicht zu warm und im Winter nicht zu kühl wird. Ferner werden durch die Zwischenschicht die außerhalb des Fahrzeuges auftretenden Geräusche wirkungsvoll gedämpft in den Fahrgastraum 18 übertragen.

Um ein Aufblähen des äußeren Verdeckbezuges 8 zu vermeiden, sind der äußere Verdeckbezug 8, der innere Dachhimmel 19 und die beiden Trägerbahnen 21, 22 der Zwischenschicht 20 an sämtlichen querverlaufenden Spriegeln 13, 14, 15, 16 befestigt. Die Befestigung erfolgt durchgehend, und zwar über einen wesentlichen Teil der Breite der Spriegel 13, 14, 15, 16. Lediglich an den seitlich außenliegenden aufrechten Abschnitten der Spriegel 13, 14, 15, 16 liegt der Verdeckbezug 8 außen lose an. Die Zwischenschicht 20 paßt sich im Bereich der Spriegel 13, 14, 15, 16 deren Formverlauf an und läuft im Bereich der Befestigung der Trägerbahnen 21, 22 und des Verdeckbezuges 8 auf Null aus. Im Bereich der Spriegel 13, 14, 15, 16 ist die Zwischenschicht 20 dem Formverlauf der Spriegel 13, 14, 15, 16 angepaßt. Der äußere Verdeckbezug 8, die beiden örtlich aneinanderliegenden Trägerbahnen 21, 22 und ein innenliegender Haltestreifen 23 sind oberhalb der Spriegel 13, 14, 15, 16 miteinander vernäht oder verschweißt. Der innenliegende Haltestreifen 23 ist um den Spriegel 13, 14, 15, 16 herumgeführt und mit diesem verklebt oder verschraubt.

Am Dachhimmel 19 sind örtlich Zugstreifen 24 angenäht, angeklebt oder angeschweißt, die nach oben hin zum Spriegel 13, 14, 15, 16 gebogen sind und mittels eines schalenförmigen Elementes 25 und einer Befestigungsschraube 26 oder eines Niet am Spriegel 13, 14, 15, 16 fixiert sind. Die schalenförmigen Elemente 25 sind - im Querschnitt gesehen - etwa viertelkreisförmig gebogen. Am hintersten Spriegel 16 kann der Zugstreifen 24 entfallen, da der Dachhimmel 8 direkt abschnittsweise um den Spriegel 16 herumgeführt und mittels des schalenförmigen Elementes 25 und der Befestigungsschraube 28 fixiert wird (Fig. 7).

Zur Vermeidung von Einfallstellen an der äußeren Verdeckkontur sind zumindest abschnittsweise geformte, aufblasbare Luftkissen 27 angeordnet, die pneumatisch oder elektrisch ansteuerbar sind. Die Luftkissen 27 werden beispielsweise beim Verriegeln des Verdecks 4 am Windschutzscheibenrahmen 5 selbsttätig aufgeblasen und beim Entriegeln wieder evakuiert. Es besteht aber auch die Möglichkeit, die über Schläuche mit einer Pumpe verbundenen Luftkissen 27 mittels eines Betätigungsschalters aufzublasen bzw. zu evakuieren. Durch das Evakuieren kann der Stauraum zum Unterbringen des Verdecks 4 eine geringere Bauhöhe aufweisen als wenn die Luftkissen 27 ständig aufgeblasen sind.

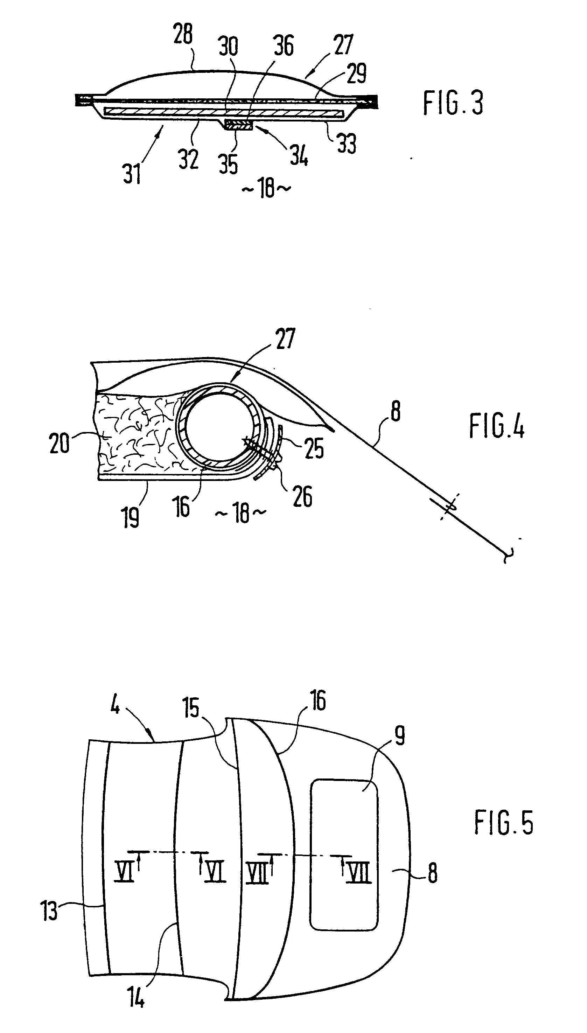

Einfallstellen am Verdeck 4 treten hauptsächlich im Randbereich der heckseitigen Sichtscheibe 9 auf, so daß die Luftkissen 27 vorzugsweise oberhalb und seitlich dieser Sichtscheibe 9 angeordnet sind. Gemäß Fig. 2 erstrecken sich die Luftkissen 27 über die gesamte Längs- und Quererstreckung des Verdecks 4. Jedes Luftkissen 27 besteht aus zwei randseitig luftdicht miteinander verbundenen Teilen 28, 29 (Fig. 3). Die Luftkissen 27 befinden sich unmittelbar unter dem äußeren Verdeckbezug 8 oder unter der Zwischenschicht 20. Unterhalb der Luftkissen 27 erstreckt sich ein schmaler Spanngurt 30, auf dem das Luftkissen 27 aufliegt.

Der Spanngurt 30 erstreckt sich gemäß Fig. 2 über die gesamte Länge des Verdecks 4 und ist mit den einzelnen Spriegeln 13, 14, 15, 16 fest verbunden. Zur Fixierung des Luftkissens 27 in Querrichtung ist eine zweiteilige Halteschlaufe 31 vorgesehen, die mit dem Luftkissen 27 verbunden ist und den Spanngurt 30 untergreift. Die beiden Teile 32, 33 der Halteschlaufe 31 sind über einen Klettverschluß 34 miteinander verbunden, so daß ein einfacher Austausch der Luftkissen 27 gewährleistet ist. Der Klettverschluß 34 besteht aus einem Flauschband 35 und einem Klettenband 36, wobei das Flauschband 35 an dem einen Teil (z. B. 32) und das Klettenband 36 am anderen Teil (z. B. 33) der Halteschlaufe 31 angebracht ist. Anstelle des Klettverschlusses 34 kann auch ein Reißverschluß oder ein anderer Schnellverschluß verwendet werden.

Zur Vermeidung von Einfallstellen am Verdeck 4 können auch Polstermaterialien herangezogen werden.

## Patentansprüche

1. Verdeck für Fahrzeuge, insbesondere Personenwagen, das einen Verdeckbezug (8) und ein aufbauseitig angelenktes Verdeckgestänge mit mehreren, quer zur Fahrzeuglängsrichtung verlaufenden Spriegeln (13, 14, 15, 16) umfasst, wobei auf der einem Fahrgastraum (18) zugekehrten Seite des äußeren Verdeckbezuges ein innerer Dachhimmel (19) angeordnet ist, **dadurch gekennzeichnet,** daß zwischen dem äußeren Verdeckbezug (8) und dem inneren Dachhimmel (19) eine wärme- und schallisolierende Zwischenschicht (20) angeordnet ist und daß der äußere Verdeckbezug, Trägerbahnen (21, 22) der wärme- und schallisolierenden Zwischenschicht (20) und der innere Dachhimmel (19) an sämtlichen quer verlaufenden Spriegeln (13, 14, 15, 16) befestigt sind.

2. Verdeck nach Anspruch 1, **dadurch gekennzeichnet,** daß die Befestigung von Verdeckbezug (8) und Trägerbahnen (20, 21) einerseits und Dachhimmel (19) andererseits über einen wesentlichen Teil der Breite der Spriegel (13, 14, 15, 16) erfolgt.

3. Verdeck nach Anspruch 1, **dadurch gekennzeichnet,** daß die Zwischenschicht (20) von einer oberen und einer unteren Trägerbahn (21, 22) begrenzt ist und daß die Zwischenschicht (20) mit den beiden Trägerbahnen (21, 22) verklebt ist.

4. Verdeck nach Anspruch 1, **dadurch gekennzeichnet,** daß sich die Zwischenschicht (20) im Bereich der Befestigung des Verdeckbezuges (8) und der beiden Trägerbahnen (21, 22) dem Formverlauf der Spriegel (13, 14, 15, 16) anpaßt und auf Null ausläuft.

5. Verdeck nach Anspruch 1, **dadurch gekennzeichnet,** daß der Verdeckbezug (8), die beiden Trägerbahnen (20, 21) und ein Haltestreifen (23) oberhalb der Spriegel (13, 14, 15) miteinander vernäht oder verschweißt sind.

6. Verdeckbezug nach Anspruch 5, **dadurch gekennzeichnet,** daß der Haltestreifen (20, 21) den Spriegel (13, 14, 15, 16) umgibt und durch Schrauben oder Kleben mit dem Spriegel (13, 14, 15, 16) verbunden ist.

7. Verdeckbezug nach Anspruch 1, **dadurch gekennzeichnet,** daß zum Festlegen des Dachhimmels (19) an diesem im Bereich der Spriegel (13, 14, 15, 16) Zugstreifen (24) angenäht, angeklebt oder angeschweißt sind, die an der Außenseite der Haltestreifen (23) anliegen und mittels eines schalenförmigen Elementes (25) und einer Befestigungsschraube (26) oder eines Niet am Spriegel (13, 14, 15, 16) fixiert sind.

8. Verdeck nach Anspruch 1, **dadurch gekennzeichnet,** daß innerhalb des Verdeckbezuges (8) zumindest örtlich geformte, aufblasbare Luftkissen (27) angeordnet sind.

9. Verdeck nach Anspruch 8, **dadurch gekennzeichnet,** daß die Luftkissen (27) pneumatisch oder elektrisch ansteuerbar sind.

10. Verdeck nach Anspruch 8, **dadurch gekennzeichnet,** daß die Luftkissen (27) beim Verriegeln des Verdecks (4) am Windschutzscheibenrahmen (5) selbsttätig aufgeblasen und beim Entriegeln wieder evakuiert werden.

11. Verdeck nach Anspruch 8, **dadurch gekennzeichnet,** daß die Luftkissen (27) oberhalb und seitlich der heckseitigen Sichtscheibe (9) des Verdecks (4) angeordnet sind.

12. Verdeck nach Anspruch 8, **dadurch gekennzeichnet,** daß jedes Luftkissen (27) aus zwei randseitig, luftdicht miteinander verbundenen Teilen (28, 29) besteht.

13. Verdeck nach Anspruch 8, **dadurch gekennzeichnet,** daß unterhalb des Luftkissens (27) zumindest ein Spanngurt (30) angeordnet ist, auf dem das Luftkissen (27) aufliegt und daß der Spanngurt (27) von einer Halteschlaufe (31) des Luftkissens (27) umgeben ist.

14. Verdeck nach Anspruch 13, **dadurch gekennzeichnet,** daß die beiden Teile (32, 33) der Halteschlaufe (31) jeweils an das Luftkissen (27) anvulkanisiert oder angenäht sind und daß beide Teile (32, 33) über einen Klettverschluß (34) lösbar miteinander verbunden sind.

15. Verdeck nach Anspruch 14, **dadurch gekennzeichnet,** daß der Spanngurt (30) zwischen dem Luftkissen (27) und der Halteschlaufe (31) angeordnet ist.

## Claims

1. A top for vehicles, in particular passenger cars, comprising a covering (8) and a rod system articulated on the body and with a plurality of hoops (13, 14, 15, 16) extending transversely to the longitudinal direction of the vehicle, wherein an inside roof lining (19) is arranged on the side of the outer top covering facing the passenger compartment (18), **characterized in that** a heat- and sound-insulating intermediate layer (20) is provided between the outer top covering (8) and the inside roof lining (19), and the outer top covering, carrier sheet (21, 22) of the heat- and sound-insulating intermediate layer (20) and the inside roof lining (19) are fastened to all the transversely extending hoops (13, 14, 15, 16)

2. A top according to Claim 1, **characterized in that** the top covering (8) and the support sheets (20, 21) are fastened on one side and the roof lining (19) is fastened on the other side over a substantial part of the width of the hoops (13, 14, 15, 16).

3. A top according to Claim 1, **characterized in that** the intermediate layer (20) is bounded by an upper and a lower support sheet (21, 22), and the intermediate layer (20) is attached with adhesive to the two support sheets (21,22).

4. A top according to claim 1, **characterized in that** in the region of the fastening of the top cover (8) and the two support sheets (21,22) the intermediate layer (20) is adapted to the shape of the hoops (13, 14, 15, 16) and finally decreases to nothing.

5. A top according to Claim 1 **characterized in that** the top covering (8), the two support sheets (20, 21) and a retaining strip (23) are sewn or welded together above the hoops (13, 14, 15).

6. A top covering according to Claim 5, **characterized in that** the retaining strip (20, 21) surrounds the hoop (13, 14, 15, 16) and is connected to the hoop (13, 14, 15, 16) by screwing or adhesion.

7. A top covering according to Claim 1, **characterized in that,** in order to secure the roof lining (19), tie strips (24) are sewn, stuck or welded onto the said roof lining (19), the tie strips (24) resting on the outside of the retaining strips (23) and being fixed on the hoop (13, 14, 15, 16) by means of a shell-shaped member (25) and a fastening screw (26) or a rivet

8. A top according to Claim 1, **characterized in that** inflatable air cushions (27) shaped at least locally are arranged inside the top covering (8).

9. A top according to Claim 8, **characterized in that** the air cushions (27) are actuable pneumatically or electrically.

10. A top according to Claim 8, **characterized in that** when the top (4) is locked on the windscreen frame (5) the air cushions are automatically inflated and when it is unlocked they are evacuated again

11. A top according to Claim 8, **characterized in that** the air cushions (27) are arranged above and laterally of the rear window (9) of the top (4).

12. A top according to Claim 8, **characterized in that** each air cushion (27) comprises two parts (28, 29) joined together in an air-tight manner at the edges.

13. A top according to Claim 8, **characterized in that** at least one tensioning belt (30), on which the air cushion (27) rests, is arranged below the air cushion (27), and the tensioning belt (27) [*sic*] is surrounded by a retaining loop (31) of the air cushion (27).

14. A top according to Claim 13, **characterized in that** the two parts (32, 33) of the retaining loop (31) are each vulcanized or sewn onto the air cusion (27), and the two parts (32, 33) are detachably connected in each other by way of a hook-and-loop fastening (34).

15. A top according to Claim 14, **characterized in that** the tensioning belt (30) is arranged between the air cushion (27) and the retaining loop (31).

## Revendications

1. Capote pour véhicules automobiles, en particulier voitures de tourisme, qui comprend une garniture (8) et une tringlerie, articulée côté carrosserie, avec plusieurs arceaux (13, 14, 15, 16) s'étendant transversalement à la direction longitudinale du véhicule, un revêtement intérieur de toit (19) étant placé sur la face, tournée vers l'habitacle (18), de la garniture extérieure de la capote, caractérisée en ce qu'il est prévu entre la garniture extérieure (8) et le revêtement intérieur de toit (19) une couche intermédiaire (20) d'isolation thermique et phonique, et en ce que la garniture extérieure de la capote, des bandes de support (21, 22) de la couche intermédiaire (20) d'isolation thermique et phonique et le revêtement intérieur de toit (19) sont fixés sur tous les arceaux (13, 14, 15, 16) s'étendant transversalement.

2. Capote selon la revendication 1, caractérisée en ce que la fixation de la garniture (8) et des bandes de support (20, 21) d'une part et du revêtement intérieur de toit (19), d'autre part, s'effectue sur une grande partie de la largeur des arceaux (13, 14, 15, 16).

3. Capote selon la revendication 1, caractérisée en ce que la couche intermédiaire (20) est limitée par une bande de support supérieure (21) et une bande de support inférieure (22), et en ce que la couche intermédiaire (20) est collée avec les deux bandes de support (21, 22).

4. Capote selon la revendication 1, caractérisée en ce que la couche intermédiaire (20) s'adapte, dans la zone de fixation de la garniture (8) et des deux bandes de support (21, 22) à la force des arceaux (13, 14, 15, 16) et finit par s'annuler.

5. Capote selon la revendication 1, caractérisée en ce que la garniture (8), les deux bandes de support (20,21) et une bande de maintien (23) sont cousues ou soudées entre elles au-dessus des arceaux (13, 14, 15).

6. Garniture de capote selon la revendication 5, caractérisée en ce que la bande de maintien (20, 21) entoure l'arceau (13, 14, 15, 16) et est assemblée par des vis ou par collage avec l'arceau (13, 14, 15, 16).

7. Garniture de capote selon la revendication 1, caractérisée en ce que pour fixer le revêtement intérieur de toit (19) sur celle-ci, dans la zone des arceaux (13, 14, 15, 16), il est cousu, collé ou soudé des bandes de traction (24) qui s'appliquent contre la face extérieure des bandes de maintien (23) et qui sont fixées sur l'arceau (13, 14, 15, 16), au moyen d'un élément (25) en forme de coque et d'une vis de fixation (26) ou d'un rivet.

8. Capote selon la revendication 1, caractérisée en ce qu'à l'intérieur de la garniture (8) sont formés au moins localement des coussins d'air (27) gonflables.

9. Capote selon la revendication 8, caractérisée en ce que les coussins d'air (27) peuvent être commandés pneumatiquement ou électriquement.

10. Capote selon la revendication 8, caractérisée en ce que les coussins d'air (27) sont automatiquement gonflés lorsque la capote (4) est verrouillée sur le cadre de pare-brise (5) et sont à nouveau dégonflés lors du déverrouillage.

11. Capote selon la revendication 8, caractérisée en ce que les coussins d'air (27) sont placés au-dessus et sur le côté de la vitre (9) arrière de la capote (4).

12. Capote selon la revendication 8, caractérisée en ce que chaque coussin d'air (27) est fait de deux parties (28, 29) assemblées entre elles sur les bords, de manière étanche à l'air.

13. Capote selon la revendication 8, caractérisée en ce qu'au-dessous du coussin d'air (27) il est prévu au moins une sangle de tension (30) sur laquelle repose le coussin d'air (27), et en ce que la sangle de tension (27) est entourée par une boucle de maintien (31) du coussin d'air (27).

14. Capote selon la revendication 13, caractérisée en ce que les deux parties (32, 33) de la boucle de maintien (31) sont vulcanisées ou cousues chacune sur le coussin d'air (27), et en ce que les deux parties (32, 33) sont assemblées entre elles de manière amovible par une fermeture à crochets (34).

15. Capote selon la revendication 14, caractérisée en ce que la sangle de tension (30) est placée entre le coussin d'air (27) et la boucle de maintien (31).
